# DEMANDE DE BREVET EUROPEEN

(11) **EP 1 499 126 A1**
(43) Date de publication de la demande: **19.01.2005**
(21) Numéro de dépôt: 04014801.7
(22) Date de dépôt: 24.06.2004
(51) Int. Cl.: H04N 7/167

(54) **Méthode de chiffrage d'un flux audio ou vidéo compressé préservant la syntaxe de codage**

(30) Priorité: 16.07.2003 FR 0308642
(71) Demandeur: STMicroelectronics, 92210 Montrouge (FR)
(72) Inventeur: Nicolai, Jean, 13790 Chateauneuf-Le-Rouge (FR)
(74) Mandataire: Marchand, André

(57) **Abrégé**

La présente invention est relative à une méthode de chiffrage d'un flux standardisé de données codées par une table de mots codés de différentes longueurs, dans laquelle on chiffre au moins une partie des bits qui, après changement aléatoire de leur(s) valeur(s) et après remplacement bit à bit dans le mot codé à chiffrer des bits non chiffrés par les bits chiffrés, provoque la formation d'un mot codé de la table de mots codés.

## Description

La présente invention est relative à une méthode de traitement de données compressées, et à des appareils et supports pour sa mise en oeuvre.

Le domaine technique de l'invention est celui de la fabrication de codeurs de données audio et/ou vidéo.

L'invention est plus particulièrement relative à une méthode de chiffrage sélectif (partiel) de données audio ou vidéo par un algorithme de chiffrement par bloc, par chaînage de blocs, ou par flux, les données étant compressées et organisées selon un format standardisé, et comportant des mots codés de longueur variable.

La distribution sécurisée de documents vidéo est aujourd'hui limitée à la diffusion de télévision "à péage" par câble ou satellite ; la sécurité est assurée par des systèmes de chiffrement "propriétaires", qui sont définis, mis en oeuvre et contrôlés par un prestataire unique : le diffuseur.

Les nouveaux standards de vidéo à faible débit, l'Internet haute vitesse et les terminaux portables en réseau sans fil, de type téléphone 3G ou assistant personnel, devraient bientôt permettre la distribution de documents vidéo : téléconférence, messages multimédias, bandes annonces de films, actualités sportives en direct, vidéo à la demande, notamment.

Des besoins de sécurité apparaissent, qui ne peuvent être satisfaits par les solutions actuelles. Les contraintes sont les suivantes :
a- la syntaxe du flux chiffré doit rester le plus conforme possible au standard de codage, afin de faciliter le transport en réseau ; la méthode de traitement de données doit assurer une transparence au transcodage et aux changements de débit, ainsi qu'une transparence aux routeurs et serveurs pour des raisons de confiance ; la méthode doit permettre l'accès aléatoire et d'autres traitements vidéo sans déchiffrage du flux complet, et doit permettre le transport par des protocoles prévus pour de la vidéo standard ;
b- l'efficacité de compression ne doit pas être dégradée du fait de la sécurisation des données par chiffrage ;
c- la sécurisation doit être compatible avec divers outils prévus par les standards de compression (MPEG4, H264) de données vidéo, en particulier la résistance aux erreurs, pour la transmission sans fil et les pertes de paquets IP (protocole Internet), ainsi que le codage multi niveaux, pour les terminaux clients à bande passante hétérogène ;
d- le niveau de sécurité et de masquage visuel doit être adapté à l'application: robustesse aux attaques spécifiques à la vidéo ;
e- la puissance de calcul requise doit rester compatible avec des terminaux embarqués, pour des applications telles que la transmission sans fil en flux continu ("streaming") de documents multimédia.

Selon la norme MPEG, une séquence vidéo est constituée d'une suite de groupes d'images, chaque groupe d'image consistant en une suite d'images de type I (intrinsèque), P (prédite) et B (bidirectionnelle) ; chaque image de type I est découpée en macroblocs ; chaque macrobloc est converti en quatre bloc de luminance et en deux bloc de chrominance, cette conversion entraînant une première perte d'information.

Chaque bloc de 64 pixels est converti en une table de 64 coefficients par une transformation DCT ("discrete cosine transform") ; cette table est compressée par quantification ("quantization") puis ordonnée et codée ("zig-zag ordering" et "run-length coding") en fonction du nombre de coefficients de valeur nulle rencontrés lors d'un balayage en zig-zag de la table; les données compressées résultantes sont codées en mots de longueur variable ("Huffman coding") ; ces transformations entraînent également une perte d'information.

Diverses méthodes de chiffrement d'un flux de données vidéo standardisé - en particulier d'un flux au standard MPEG - ont été proposées en vue de satisfaire certaines des contraintes énoncées ci-avant.

Lorsque l'on chiffre entièrement un mot codé ("codeword") faisant partie d'une table de mots codés de différentes longueur, il en résulte généralement un codeword qui n'appartient pas à cette table (mot "non-conforme") ; par conséquent, un décodeur qui analyse les codewords bit à bit et prend des décisions à chaque bit, ne pourra pas reconnaître la frontière du codeword chiffré, se "perdra" et ne saura plus quel champ de données il est en train d'analyser ; cet inconvénient provient du fait que les codewords sont de longueur variable.

Le document "A fast MPEG video encryption algorithm", Changgui Shi et al, ACM Multimedia 98, décrit une méthode de chiffrement de données vidéo compressées au format MPEG, par une clé secrète ; les bits de signe des coefficients (AC et DC) de Huffman - qui sont des mots codés de longueur variable - sont "XORés" bit à bit avec une clé de longueur déterminée (c'est-à-dire combinés bit à bit avec les bits de la clé au moyen de portes logiques XOR, soit OU EXCLUSIF), et sont respectivement remplacés - dans le flux de données vidéo - par la valeur de bit résultant de cette opération ; dans ce document, il est proposé d'utiliser une ou plusieurs clé(s) longues ; une clé de 128 bits est utilisée à titre d'exemple.

Selon ce document, on chiffre seulement les bits de signe des codewords, et seulement pour les codewords qui représentent des données utiles (vecteurs de mouvement et coefficients DCT représentant la texture), ce qui résulte en un codeword conforme. Si l'on chiffrait les codewords représentant autre chose, comme par exemple le nombre de blocs codés, même en obtenant après chiffrage des codewords conformes, le décodeur se perdrait.

Cette méthode de chiffrage sélectif, qui opère sur une faible partie du flux de données, nécessite des ressources de calcul moindres que celles nécessitées par les méthodes de chiffrage intégral du flux ; en contrepartie, l'obscurcissement des images chiffrées est relativement faible.

Selon le document Changgui Shi et al, susmentionné, des points de synchronisation, qui sont ajoutés au flux de données, permettent à un décodeur disposant de la clé de savoir à partir de quelle position dans le flux chiffré, il doit recommencer à utiliser la clé de déchiffrage ; ces points de synchronisation sont ajoutés au début de chaque groupe d'images, au début de chaque image de type I ou au début d'un nombre prédéterminé d'images.

Selon l'annexe E de la norme ISO 14496-2, dans un mode "video packet resynchronization", une marque de synchronisation périodique peut être créée à la fin d'un macrobloc lorsque le nombre de bits depuis la marque précédente est supérieur à un certain seuil ; un paquet vidéo (partie du flux comprise entre deux marques successives) présente ainsi un nombre variable de macroblocs.

Lorsque le flux de données est partiellement chiffré avec un algorithme de chiffrement par bloc, tel que les standards DES (bloc de 64 bits) et à fortiori AES (128 bits), le nombre de bits de données à chiffrer à l'intérieur d'un tel paquet vidéo, peut être inférieur au nombre de bits du bloc de chiffrage, notamment lorsque le paquet contient les vecteurs de mouvement associés aux images de type P et B; un tel paquet sera dans ce cas transmis sans chiffrement, et l'obscurcissement de la séquence sera diminué.

Le brevet US-6,505,299-B1 (Zeng et al) décrit différentes méthodes de chiffrage de données vidéo quantifiées (partiellement compressées) avant leur codage par des tables de Huffman, par encodage RLE, codage arithmétique ou autre codage d'entropie : une transformation espace-fréquence est appliquée à l'image, ce qui génère une carte de coefficients de transformation ; ces coefficients sont ensuite chiffrés, soit par brouillage de leurs bit de signe, soit par brouillage de leurs bits les moins significatifs, soit par mélange de blocs de la carte, soit par mélange de coefficients correspondant à une bande de fréquence spatiale de la carte.

Ce document propose par ailleurs de chiffrer les vecteurs de mouvement des images de type P et B ; ceci augmente l'obscurcissement des images chiffrées.

Un inconvénient de ces méthodes de chiffrage est qu'elles réduisent l'efficacité de la compression des données obtenue par quantification ; un autre inconvénient est qu'elles nécessitent des moyens de calcul plus importants que ceux nécessaires à un chiffrage après codage de Huffman ou équivalent.

Il a par ailleurs été proposé dans la demande de brevet US-2002/0018565 (Luttrell et al) une méthode de chiffrage sélectif d'un flux de données MPEG4 préservant la syntaxe de codage ; selon cette méthode, on chiffre les index (de longueur fixe égale à n) d'une table de 2ⁿ mots de longueur variable, et on remplace, pour chaque index de la table, le mot (en clair) correspondant à cet index par le mot (en clair) correspondant à l'index chiffré ; cette méthode ne permet pas de conserver la relation de la table en clair entre la longueur d'un mot codé et la fréquence d'apparition du symbole correspondant dans un flux de données ; elle dégrade par conséquent la compression de données par codage à l'aide de la table chiffrée.

La présente invention a pour objet de proposer une méthode améliorée de chiffrage d'un flux standardisé de données compressées.

La présente invention a également pour objet de proposer une telle méthode qui remédie - en partie au moins - aux inconvénients des méthodes connues de chiffrage de flux de données audio et vidéo compressées.

Au sens de la présente demande, les termes et expressions "mot codé", "mot de code" et "codeword" sont employés indifféremment pour désigner un mot d'une table de mots de différentes longueurs.

Selon un premier aspect, l'invention propose une méthode de chiffrage de mots codés d'une table de mots codés ne présentant pas tous la même longueur, dans laquelle on chiffre, de préférence pour chaque mot codé de la table, au moins une partie des bits - et de préférence tous les bits - qui, après changement aléatoire de leur(s) valeur(s) et après remplacement bit à bit dans le mot codé à chiffrer des bits non chiffrés par les bits chiffrés, aboutit à la formation d'un second mot codé de la table de mots codés; la longueur du mot codé est ainsi invariante lors de ce chiffrage.

En d'autres termes et selon un autre aspect d'une méthode de chiffrage selon l'invention, on mélange (on permute) les mots codés d'au moins un groupe de plusieurs mots codés (et de préférence de tous les groupes de plusieurs mots codés) de la table qui présentent la même longueur.

Selon un mode préférentiel de réalisation de l'invention, on ajoute à la table de mots codés de différentes longueurs, un index d'identification de chaque mot codé de la table, ainsi qu'au moins un paramètre définissant, pour chaque mot codé de la table, le nombre - et éventuellement la position dans le mot codé - du ou des bit (s) à chiffrer.

Pour chiffrer une suite de mots codés d'un flux de données, on détermine pour chaque mot codé, à l'aide de cette table, le nombre et la position des bits à chiffrer du mot ; on extrait du mot le (s) bit (s) à chiffrer et on le (s) place dans un tampon en concaténant dans ce tampon les bits à chiffrer extraits des mots codés de la suite des mots codés ; dans le cas où on utilise un algorithme de chiffrement par bloc (AES ou DES par exemple), on remplit ainsi de bits à chiffrer un tampon dont la dimension correspond de préférence à celle du bloc de chiffrement ; lorsque ce tampon est plein, on chiffre la chaîne de bits présents dans le tampon et on replace chacun des bits chiffrés à la place qu'ils occupaient respectivement avant chiffrage dans le mot codé correspondant de la suite de mots codés ; on obtient ainsi après chiffrage, un flux de données conforme au standard de compression.

Pour déchiffrer une suite de mots codés ainsi chiffrés, on effectue les opérations inverses : on extrait de chaque mot du flux les bits chiffrés que l'on place dans un tampon dont la dimension est celle du bloc de chiffrage ; lorsque ce tampon est plein, on déchiffre la série de bits qu'il contient, puis on remplace dans le flux respectivement chaque bit chiffré extrait par le bit déchiffré de même position dans le tampon ; on vide ensuite le tampon avant de traiter de la même façon les mots suivants.

Selon un autre aspect, l'invention propose un support lisible par un ordinateur sur lequel est enregistré un code de programme mettant en oeuvre les opérations définies ci avant, pour permettre à l'ordinateur de chiffrer un flux de données compressées, ou inversement de déchiffrer un flux de données compressées chiffrées conformément à l'invention.

L'invention permet de chiffrer des flux de données codées avec des mots de code de longueur variable non signés, en préservant la syntaxe de codage du flux.

L'invention permet également, dans le cas de tables de mots codés signés, d'obtenir un brouillage plus complet des données (images ou sons en particulier), par comparaison avec les méthodes chiffrant seulement le bit de signe.

L'invention s'applique en particulier aux méthodes utilisant un algorithme de chiffrement par bloc de 64 bits, de 128 bits, de 192 bits, ou de 256 bits pour chiffrer un ou plusieurs bit(s) des données de vecteurs de mouvement d'images de type P et B selon la norme MPEG4, et pour chiffrer sélectivement des bits de données de texture d'images, de blocs et/ou macroblocs d'images.

Selon un autre aspect, l'invention propose un codeur (ou un décodeur) de données audio ou vidéo formatées et compressées, qui comporte :
- une table de mots codés de différentes longueurs, la table comportant pour chaque mot un index et un paramètre définissant les bits du mot à (dé)chiffrer,
- un tampon prévu pour recevoir temporairement les bits de données sélectionnés en vue de leur (dé)chiffrage,
- des moyens de (dé)chiffrement par bloc aptes à (dé)chiffrer les bits stockés dans le tampon,
- des moyens pour actionner les moyens de (dé)chiffrement par bloc, pour provoquer le (dé)chiffrement des bits stockés dans le tampon lorsque le tampon est plein, pour remplacer les bits sélectionnés dans le flux de données par les bits stockés et (dé)chiffrés, et pour vider le tampon,
la taille du tampon étant de préférence égale au nombre de bits d'un bloc des moyens de (dé)chiffrement par bloc (ou bien égale à un multiple entier de ce nombre).

D'autres caractéristiques et avantages de l'invention apparaissent dans la description suivante, qui se réfère aux dessins annexés, et qui illustre sans aucun caractère limitatif des modes préférés et exemples de réalisation de l'invention.

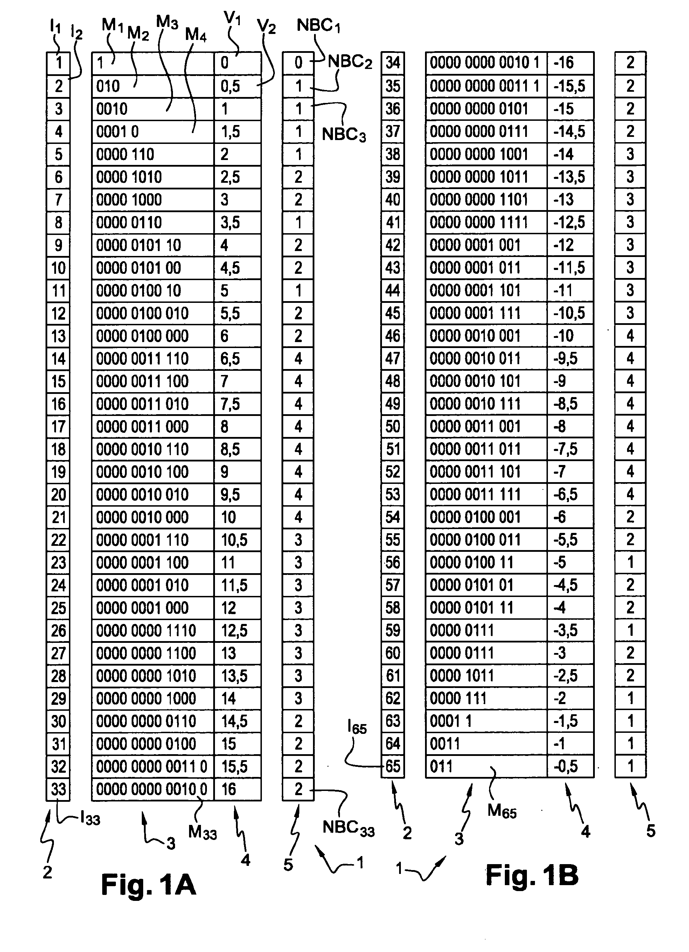

Les figures 1a et 1b représentent une table utilisée conformément à l'invention, qui incorpore la table B-12 de l'annexe B de la norme MPEG4 (ISO 14496-2) ainsi qu'une colonne d'index respectivement associés à chaque mot, et qu'une colonne de paramètres indiquant le nombre de bits chiffrables de chaque mot.

La figure 2 est un schéma illustrant le chiffrage d'une suite de mots d'un flux de données, à l'aide de la table des figures la et 1b.

La figure 3 est un schéma illustrant le déchiffrage d'une suite de mots d'un flux de données chiffrées selon la méthode illustrée figure 2.

Selon une caractéristique de l'invention, la méthode de chiffrage d'un flux MPEG4 ou autre flux compressé utilisant des codes de longueur variable (codewords), est telle que le flux chiffré se conforme au standard (MPEG4 ou autre), du fait que les codewords chiffrés sont des codewords valides (conformes au standard) provenant de la même table de codes.

A cet effet, on chiffre tous les bits du codeword qui sont tels que, après changement aléatoire de leur valeur, le nouveau codeword est encore valide, c'est à dire fait encore partie de la même table ; et on chiffre de préférence seulement des bits de codewords représentant des données utiles (vecteurs de mouvement et coefficients DCT de texture).

L'invention présente plusieurs avantages par rapport au chiffrage des seuls bits de signe :
- on obtient un obscurcissement visuel plus important ;
- la résistance du flux chiffré aux attaques est meilleure, grâce à un nombre de bits chiffrés plus élevé ;
- le nombre de bits modifiés étant plus grand, le nombre de bits à chiffrer qui sont transférés dans le tampon correspondant à la dimension d'un bloc (128 dans le cas de l'AES) d'un algorithme de chiffrage par bloc, est atteint après un moindre nombre de mots ; on peut ainsi rapprocher deux marques consécutives de synchronisation, lorsque l'on utilise une méthode d'insertion de marques dans laquelle on n'insère une marque de synchronisation dans le flux de données compressées qu'après que le nombre de bits chiffrés ait atteint ou dépassé le nombre de bits du bloc de chiffrement.

Dans ce cas, de préférence, on compte le nombre total de bits du flux de données écoulés depuis la précédente marque de synchronisation, et on n'insère une nouvelle marque de synchronisation qu'après que le nombre total de bits écoulés compté n'ait dépassé un seuil (N) prédéterminé, ledit seuil étant supérieur audit nombre de bits du bloc de chiffrement.

Pour le format MPEG4, la méthode selon l'invention s'applique aux tables de codewords suivantes (Cf. ISO14496-2 annexe B):
- Table B-12 : "VLC table for MVD";
- Table B-15 : "Differential DC additional codes";
- Table B-16 : "VLC Table for Intra Luminance and Chrominance TCOEF";
- Table B-17 : "VLC table for Inter Lumimance and Chrominance TCOEF";
- Table B-23 : "RVLC table for TCOEF".

Les codes de longueur variable étant utilisés dans d'autres systèmes de compression tels que la compression audio AAC, la méthode selon l'invention peut s'y appliquer.

Selon un mode préféré de réalisation, pour brouiller une de ces tables de mots codés présentant différentes longueurs, on chiffre une partie au moins d'un nombre N entier positif non nul de bits chiffrables d'un nombre M (M=2^{N}) de mots codés de longueur identique - formant un groupe de mots codés - présents dans la table de mots codés, ces M mots codés se différenciant uniquement par la valeur (0 ou 1) de leur dits bits chiffrables ; de préférence, on chiffre tous lesdits N bits chiffrables des mots codés du groupe de M mots codés de la table.

Lorsque l'on applique la méthode aux tables B-12 ou B16, les bits chiffrables sont regroupés en partie droite des mots codés.

Grâce au fait que l'on ne chiffre pas les bits regroupés en partie gauche des mots codés, le décodage par lecture séquentielle, de gauche à droite et bit à bit, d'un flux de mots codés chiffrés concaténés est facilité.

L'exemple suivant porte sur la table B-12 de codewords pour le codage des vecteurs de mouvement.

Par référence aux figures la et 1b, la table 1 comporte quatre colonnes 4, 3, 2, 5 comportant respectivement :
- des valeurs V, en l'occurrence des valeurs de différences de vecteurs de mouvement, telles que V1 et V2 ;
- des mots codés M respectivement associés aux différentes valeurs V à coder, tels que M1, M2, M3, M4, M33, M65 ;
- des index I allant de 1 à 65 pour identifier respectivement chaque mot M de la table, tels que I1, I2, I33, I65 ;
- des paramètres NBC respectivement associés à chaque mot M de la table, tels que NBC1, NBC2, NBC3, NBC33, pour définir le nombre de bit du mot considéré dont le remplacement par le bit complémentaire produit un autre mot de la table 1.

On voit sur cette figure que la plupart des mots codés M de huit bits au moins comportent un nombre NBC de bits chiffrables égal à deux, trois ou quatre ; en particulier, dans le groupe des quatre mots codés de treize bits, dont fait partie le mot M33, deux bits de chaque mot peuvent être complémentés (inversés).

Comme décrit ci avant, les bits chiffrables de cette table sont les bits groupés à droite de chaque mot codé ; si tel n'est pas le cas, la table doit contenir en outre, pour chaque mot codé M, l'information de position de chaque bit chiffrable de ce mot.

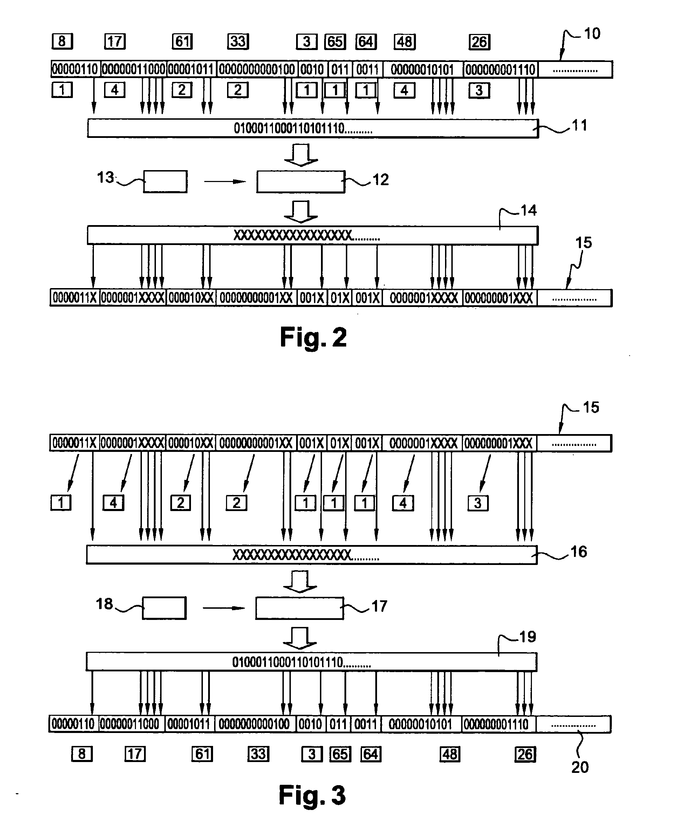

Pour chiffrer la suite 10 (figure 2) de mots M (M7, M17, M61, M33, etc.) codés, on lit dans la table 1 le nombre NBC (égal à deux) de bits chiffrables du 1er mot M7 ; on transfère les deux bits chiffrables du mot M7 dans un tampon 11 ; on répète l'opération pour les mots (M17...) suivants du flux 10 à chiffrer, et on concatène au fur et à mesure les bits chiffrables extraits de ces mots dans le tampon 11, jusqu'au remplissage de celui-ci ; à ce moment on chiffre les bits du tampon 11 en les présentant, ainsi qu'une clé 13 de chiffrage permettant de chiffrer le tampon 11 en un tampon 14 de même dimension, dont les bits sont replacés - bit à bit - dans le flux de mots, aux positions respectives des bits extraits du flux 10, de façon à former un flux chiffré 15.

La clé 13 peut comporter le même nombre de bits que le tampon 11 ; elle est alors présentée, de même que les bits du tampon 11, aux entrées de portes OU exclusif (XOR) ; les sorties de ces portes comportant les bits ainsi chiffrés sont placées dans le tampon 14 de sortie et replacés bit à bit dans le flux de mots ; en variante, une clé de longueur différente de celle du tampon 11 peut être utilisée pour chiffrer les bits de ce tampon.

Pour déchiffrer la suite 15 (figure 3) de mots codés chiffrés, l'analyse du flux est faite de gauche à droite ; quand un mot de code est analysé par un décodeur MPEG, une décision est prise à chaque bit ; après lecture du dernier bit non chiffré d'un mot chiffré, le décodeur détermine le groupe de mots chiffrés de la table correspondant aux bits non chiffrés déjà lu et détermine en conséquence le nombre de bits chiffrés suivant le dernier bit "en clair" ; lorsque, par exemple, la séquence de bits "en clair" est "000010", la lecture de la table 1 permet de déterminer que le mots chiffré comporte deux bits chiffrés, qui suivent ces bits non chiffrés .

Le traitement de ces bits est alors identique à celui utilisé pour le chiffrage : les bits à déchiffrer sont concaténés dans un tampon 16, jusqu'à son remplissage ; le contenu du tampon peut être appliqué bit à bit aux entrées de portes XOR 17 avec une clé 18 de même dimension ; les bits déchiffrés sur les sorties des portes sont replacés dans le flux à déchiffrer, par l'intermédiaire d'un tampon 19, pour former un flux 20 déchiffré.

## Revendications

1. Méthode de chiffrage d'un flux (10) standardisé de données codées par une table (1) de mots codés (M) de différentes longueurs, dans laquelle on chiffre au moins une partie des bits qui, après changement aléatoire de leur(s) valeur(s) et après remplacement bit à bit dans le mot codé à chiffrer des bits non chiffrés par les bits chiffrés, provoque la formation d'un mot codé de la table (1) de mots codés.

2. Méthode selon la revendication 1, dans laquelle on chiffre tous les bits qui, après changement aléatoire de leur(s) valeur(s) et après remplacement bit à bit dans le mot codé à chiffrer des bits non chiffrés par les bits chiffrés, aboutit à la formation d'un mot codé de la table de mots codés.

3. Méthode selon la revendication 1 ou 2, dans laquelle on permute des mots d'au moins un groupe de mots de la table présentant une longueur identique, et de préférence on permute des mots de chaque groupe de mots de la table présentant une longueur identique.

4. Méthode selon l'une quelconque des revendications 1 à 3, dans laquelle les mots codés (M) ne sont pas signés.

5. Méthode selon l'une quelconque des revendications 1 à 4 dans laquelle on ajoute à la table de mots codés de différentes longueurs, un index (I) d'identification de chaque mot codé de la table, ainsi qu'au moins un paramètre (NBC) définissant, pour chaque mot codé de la table, le nombre de bit à chiffrer.

6. Méthode selon l'une quelconque des revendications 1 à 4 dans laquelle on ajoute à la table de mots codés de différentes longueurs, un index d'identification de chaque mot codé de la table, ainsi qu'au moins un paramètre définissant, pour chaque mot codé de la table, le nombre (NBC) et la position, dans le mot codé, du ou des bit(s) à chiffrer.

7. Méthode selon l'une quelconque des revendications 1 à 6 dans laquelle, pour chiffrer une suite de mots codés d'un flux de données :
- on détermine pour chaque mot codé, à l'aide de la table, le nombre et la position des bits à chiffrer du mot ;
- on extrait du mot le(s) bit(s) à chiffrer et on le(s) place dans un tampon (11) en concaténant dans ce tampon les bits à chiffrer extraits des mots codés de la suite des mots codés ;
- lorsque ce tampon (11) est plein, on chiffre (12, 13) la chaîne de bits présents dans le tampon et on replace chacun des bits chiffrés à la place qu'ils occupaient respectivement avant chiffrage dans le mot codé correspondant de la suite de mots codés.

8. Méthode selon la revendication 7 dans laquelle on utilise un algorithme de chiffrement par bloc de 64 bits, de 128 bits, de 192 bits, ou de 256 bits, et on remplit de bits à chiffrer ledit tampon dont la dimension correspond à celle du bloc de chiffrement.

9. Méthode selon l'une quelconque des revendications 1 à 8 dans laquelle les données sont des données vidéo au format MPEG, et dans laquelle:
- on chiffre bit à bit une partie seulement des données compressées, avec un algorithme de chiffrement par bloc d'un nombre prédéterminé de bits,
- on compte les bits chiffrés lors du chiffrage sélectif du flux de données compressées et on insère une marque de synchronisation dans le flux de données compressées après que le nombre de bits chiffrés compté ait dépassé ledit nombre prédéterminé de bits.

10. Méthode selon la revendication 9 dans laquelle on compte le nombre total de bits du flux de données écoulés depuis la précédente marque de synchronisation, et on n'insère une nouvelle marque de synchronisation qu'après que le nombre total de bits écoulés compté n'ait dépassé un seuil (N) prédéterminé, ledit seuil étant supérieur audit nombre prédéterminé.

11. Méthode selon l'une quelconque des revendications 1 à 10, dans laquelle on chiffre un ou plusieurs bit(s) des données (V) de vecteurs de mouvement d'images de type P et B selon la norme MPEG4.

12. Méthode selon l'une quelconque des revendications 1 à 11, dans laquelle on chiffre un ou plusieurs bit(s) des données de texture d'images de type I, P et/ou B.

13. Flux compressé de données chiffrées obtenu indirectement par l'une quelconque des revendications 1 à 12.

14. Codeur ou décodeur de données audio ou vidéo formatées et compressées, **caractérisé en ce qu'**il comporte :
- une table (1) de mots codés de différentes longueurs, la table comportant pour chaque mot un index (I) et un paramètre (NBC) définissant les bits du mot à (dé)chiffrer,
- un tampon (11, 16) prévu pour recevoir temporairement les bits de données sélectionnés en vue de leur (dé)chiffrage,
- des moyens (12, 13, 17, 18) de (dé)chiffrement par bloc aptes à (dé)chiffrer les bits stockés dans le tampon,
- des moyens pour actionner les moyens de (dé)chiffrement par bloc, pour provoquer le (dé)chiffrement des bits stockés dans le tampon lorsque le tampon est plein, pour remplacer les bits sélectionnés dans le flux de données par les bits stockés et (dé)chiffrés, et pour vider le tampon.

15. Codeur ou décodeur selon la revendication 14, dans lequel la taille du tampon (11, 16) est égale au nombre de bits d'un bloc des moyens de (dé)chiffrement par bloc, ou bien égale à un multiple entier de ce nombre.

16. Support lisible par un ordinateur, sur lequel est enregistré un code de programme mettant en oeuvre les opérations définies à l'une des revendications 1 à 12, pour permettre à l'ordinateur de chiffrer un flux de données compressées, ou inversement de déchiffrer un flux de données compressées chiffrées.
